# FASCICULE DE BREVET EUROPEEN

(11) **EP 2 043 902 B1**
(45) Date de publication et mention de la délivrance du brevet: **26.05.2010**
(21) Numéro de dépôt: 07823302.0
(22) Date de dépôt: 18.07.2007
(51) Int. Cl.: B62D 13/04

(54) **TRAIN ROULANT A ESSIEUX AUTO-VIREURS COUPLES POUR SEMI-REMORQUE**
REIFENSATZ MIT GEKOPPELTEN SELBSTLENKENDEN ACHSEN FÜR EINEN SATTELAUFLIEGER
WHEEL SET WITH COUPLED SELF-STEERING AXLES FOR A SEMI-TRAILER

(30) Priorité: 20.07.2006 FR 0606634
(43) Date de publication de la demande: 08.04.2009
(73) Titulaire: Société de Technologie Michelin, 63000 Clermont-Ferrand (FR); Michelin Recherche et Technique S.A., 1763 Granges-Paccot (CH)
(72) Inventeur: AUBAREDE, Francis, 63200 Pontgibaud (FR); FERLIN, Olivier, 63200 Malauzat (FR)
(74) Mandataire: Lasson, Cédric Y. M.
(86) Numéro de dépôt international: PCT/FR2007/001238
(87) Numéro de publication internationale: WO 2008/009820

(56) Documents cités:
- WO-A-98/03387
- DE-A1- 2 312 565
- DE-A1- 2 358 943

## Description

L'invention concerne, de façon générale, la conception des engins de transport.

Plus précisément, l'invention concerne un train roulant pour semi-remorque, destiné à permettre un roulement de la semi-remorque sur le sol dans un sens de déplacement privilégié, ce train incluant au moins un essieu arrière et un essieu avant, chaque essieu comprenant au moins une traverse, des supports droit et gauche respectivement liés à des extrémités droite et gauche de la traverse, et des roues droite et gauche respectivement portées par les supports droit et gauche et tournant autour d'axes droit et gauche respectifs.

Comme le comprendra l'homme du métier, les expressions "avant" et "arrière" ici utilisées en référence aux essieux sont à comprendre comme désignant les positions respectivement occupées par ces essieux non pas par rapport à la semi-remorque, mais par rapport à son train roulant qui est globalement situé à l'arrière de la semi-remorque.

Par ailleurs, la mention d'un essieu avant et d'un essieu arrière ne fait aucune hypothèse implicite sur l'absence ou l'existence d'un ou plusieurs essieux supplémentaires, mais vise seulement à indiquer que l'essieu avant est devant l'essieu arrière dans la direction de déplacement privilégiée de la semi-remorque, c'est-à-dire la direction dans laquelle la semi-remorque est tirée par le tracteur.

L'essor des transports routiers, qui incite à augmenter la taille des véhicules, a conduit au développement de semi-remorques utilisant jusqu'à trois essieux groupés, appelées "remorques tridem".

Néanmoins, le respect des normes en vigueur impose qu'un tracteur équipé de sa semi-remorque puisse inscrire sa trajectoire dans une couronne circulaire comprise entre un rayon de 5,3 mètres et un rayon de 12,5 mètres.

La nécessité de concilier ces besoins a priori antinomiques a conduit, depuis quelques années déjà, à remplacer progressivement les essieux fixes qui équipaient autrefois les semi-remorques par des essieux permettant un braquage passif ou actif des roues dans les virages, principalement dans les ronds points ou en manoeuvre, de manière à augmenter la facilité de conduite des grands poids lourds tout en évitant ou en réduisant le ripage, et donc l'usure, des roues qui les équipent.

Il est cependant apparu que la réduction de ripage des roues sur un essieu d'une semi-remorque pouvait entraîner une augmentation du ripage des roues sur un autre essieu de la même semi-remorque, de sorte que les conditions de braquage des roues d'une semi-remorque sont jusqu'à présent restées difficiles à identifier et à maîtriser avec des moyens simples.

Additionellement le document DE2312565 A divulge le préambule de la revendication 1.

Dans ce contexte, la présente invention a pour but de proposer un train roulant pour semi-remorque réalisant un meilleur compromis entre les besoins contradictoires précédemment évoqués.

A cette fin, le train roulant de l'invention, par ailleurs conforme à la définition générique qu'en donne le préambule ci-dessus, est essentiellement **caractérisé en ce que**, pour chaque essieu, les supports droit et gauche sont montés sélectivement pivotants par rapport à la traverse au moyen de liaisons à pivots droite et gauche respectives incluant des pivots droit et gauche respectifs, en ce que le pivot de chaque roue de chaque essieu est disposé en avant de l'axe de cette roue dans le sens de déplacement privilégié, chaque roue étant ainsi soumise à un couple de pivotement en cas de virage de la remorque, en ce que ce train comprend des organes de transmission de couple agencés pour transmettre un couple de pivotement entre les supports équipant l'essieu arrière et les supports équipant l'essieu avant, en ce que, pour chaque essieu, les supports droit et gauche sont montés sélectivement pivotants par rapport à la traverse indépendamment l'un de l'autre, et en ce que les supports droit et gauche équipant chacun des essieux arrière et avant sont respectivement couplés aux supports droit et gauche équipant l'autre de ces essieux.

Selon un premier agencement possible, les organes de transmission de couple sont agencés pour transmettre, entre les supports équipant l'essieu arrière et les supports équipant l'essieu avant, un couple de pivotement sollicitant les roues arrière et avant dans des sens de pivotement contraires.

Il est cependant possible de prévoir que le couple de pivotement transmis entre les supports équipant l'essieu arrière et les supports équipant l'essieu avant sollicite les roues arrière et avant dans un même sens de pivotement.

De préférence, le pivot de chacune des roues droite et gauche de chacun des essieux s'étend suivant une direction sensiblement verticale dans un plan sensiblement médian de cette roue et perpendiculaire à l'axe de cette roue.

Par la conception même du train roulant de l'invention, il est possible de prévoir que les organes de transmission de couple soient totalement passifs.

Dans un premier mode de réalisation de l'invention, les organes de transmission de couple comprennent essentiellement des organes mécaniques allongés, tels que tringles ou câbles, adaptés à la transmission de forces de traction / compression, et des leviers de renvoi.

Les essieux arrière et avant peuvent alors comprendre des tringles transversales dont chacune relie un support à un levier de renvoi équipant l'essieu correspondant, et une tringle longitudinale peut être agencée pour transmettre le couple de pivotement entre les supports équipant l'essieu arrière et les supports équipant l'essieu avant par l'intermédiaire des leviers de renvoi.

Avantageusement, les leviers de renvoi sont montés rotatifs sur les traverses respectives des essieux arrière et avant.

Dans un autre mode de réalisation de l'invention, il est possible de prévoir que les organes de transmission de couple comprennent au moins des premier et second vérins et des première et seconde liaisons hydrauliques, que les vérins présentent chacun un corps et des première et seconde chambres de travail de volumes complémentaires, que les premier et second vérins soient respectivement associés aux essieux avant et arrière et présentent des tiges respectives commandant les volumes de leurs chambres de travail respectives, et que chaque vérin soit lié de façon articulée, par son corps et sa tige, à la traverse et à l'un des supports équipant l'essieu associé, la première liaison hydraulique reliant entre elles les premières chambres des premier et second vérins, et la seconde liaison hydraulique reliant entre elles les secondes chambres des premier et second vérins.

Dans ce cas, les première et seconde liaisons hydrauliques peuvent alors comprendre des premier et seconds accumulateurs hydropneumatiques respectifs et des première et seconde paires respectives d'électrovalves, chaque électrovalve de la première paire étant interposée entre le premier accumulateur et la première chambre de l'un des premier et second vérins, et chaque électrovalve de la seconde paire étant interposée entre le second accumulateur et la seconde chambre de l'un des premier et second vérins.

Le train roulant de l'invention peut ne comporter que lesdits essieux avant et arrière, mais il peut aussi comprendre en outre un essieu supplémentaire, de préférence constitué par un essieu fixe.

Dans le cas où le couple de pivotement transmis entre les supports équipant l'essieu arrière et les supports équipant l'essieu avant sollicite les roues arrière et avant dans des sens de pivotement contraires, l'essieu supplémentaire est de préférence disposé entre les essieux avant et arrière.

En revanche, dans le cas où le couple de pivotement transmis entre les supports équipant l'essieu arrière et les supports équipant l'essieu avant sollicite les roues arrière et avant dans le même sens de pivotement, l'essieu supplémentaire est de préférence disposé devant l'essieu avant, et donc à la fois devant l'essieu avant et l'essieu arrière.

Le train roulant selon l'invention peut aussi avantageusement comprendre un cadre élastiquement déformable en torsion, liant longitudinalement entre eux les essieux avant et arrière.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue de dessus d'un train roulant à roues indépendantes couplées par des organes mécaniques de transmission de couple incluant des tringles et conformes à l'invention;
- la figure 2 est une vue de dessus d'un train roulant à roues indépendantes couplées par des organes mécaniques de transmission de couple incluant des câbles et conformes à l'invention;
- la figure 3 est une vue de dessus d'un train roulant à roues indépendantes couplées par des organes hydrauliques de transmission de couple incluant des vérins et conformes à l'invention;
- la figure 4 est une vue schématique du train roulant illustré à la figure 3, mais représenté en position de virage;
- la figure 5 est un schéma d'un circuit hydraulique et hydropneumatique utilisable dans un train conforme à l'invention;
- les figures 6a à 6c sont des schémas illustrant le comportement des roues droites de trois configurations de trains roulants, dont les deux premières correspondent à des configurations connues et la troisième à l'invention;
- la figure 7a est une vue schématique de dessus d'un train roulant d'une remorque tridem correspondant à un autre agencement possible de couplage des roues des essieux avant et arrière, ce train étant représenté dans une position de roulage en ligne droite;
- la figure 7b est une vue schématique de dessus représentant le train roulant illustré à la figure 7a dans une position de roulage en virage;
- la figure 8 est une vue schématique de dessous d'un train roulant semblable à celui de la figure 4, mais doté d'un cadre et utilisant, en tant qu'organes de transmission de couple, des organes mécaniques à la place d'organes hydrauliques;
- la figure 9 est une vue en perspective d'un cadre utilisable dans un train roulant conforme à l'invention;
- les figures 10a à 10c sont des demies vues de dessous représentant, dans diverses positions de roulage, un train roulant tel qu'illustré plus schématiquement à la figure 8;
- les figures 11 et 12 sont des demies vues en perspective d'un train roulant tel qu'illustré aux figures 10a à 10c;
- la figure 13 est une vue de dessous partielle en perspective d'une remorque utilisant un train roulant tel qu'illustré aux figures 11 et 12;
- la figure 14 est une vue agrandie d'un détail de la figure 13; et
- les figures 15 et 16 sont des vues partielles en perspective, respectivement de dessous et de dessus, d'un train roulant tel qu'illustré aux figures 11 à 14.

Comme indiqué précédemment, l'invention concerne un train roulant destiné à équiper une semi-remorque tirée par un véhicule tracteur dans une direction de traction AV représentant le sens de déplacement privilégié de cette remorque.

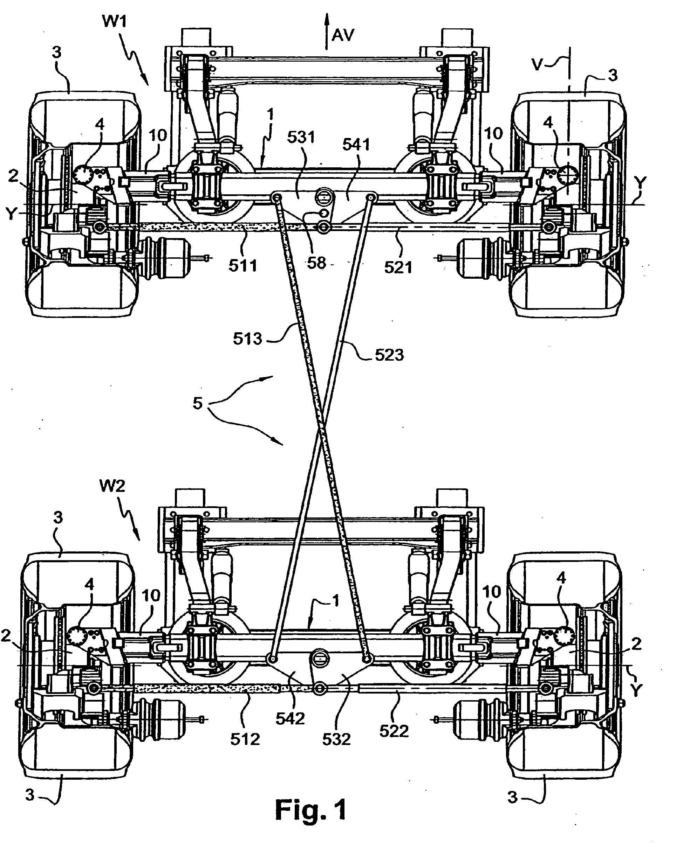

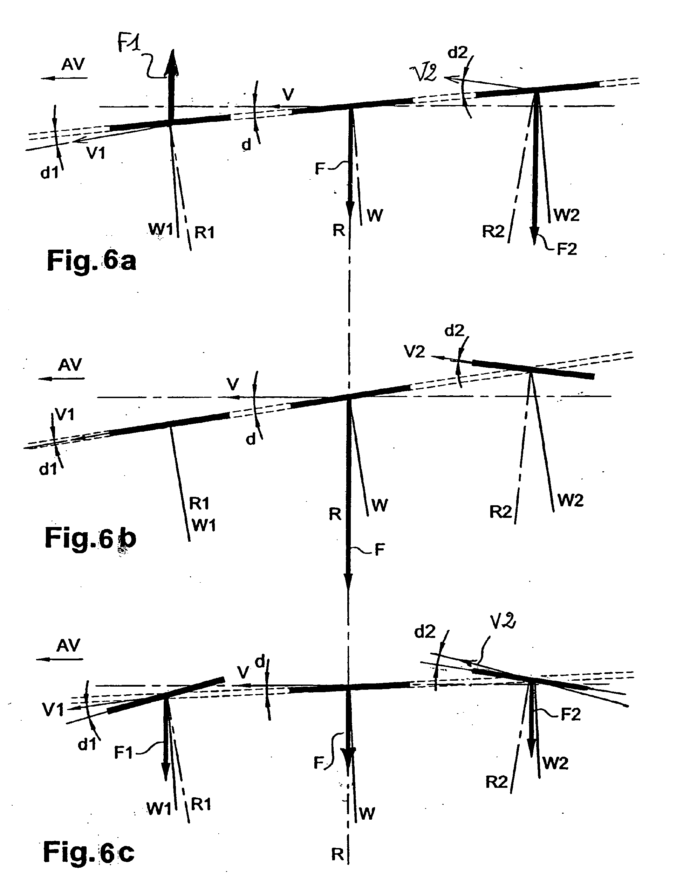

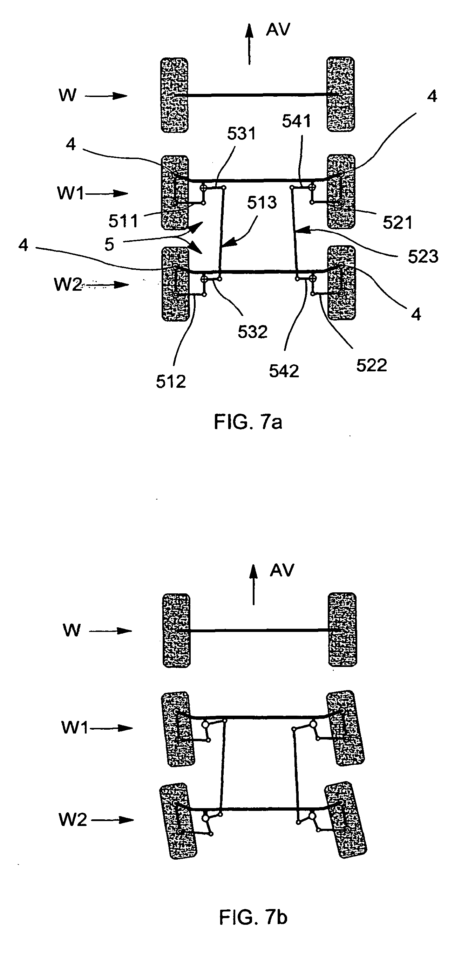

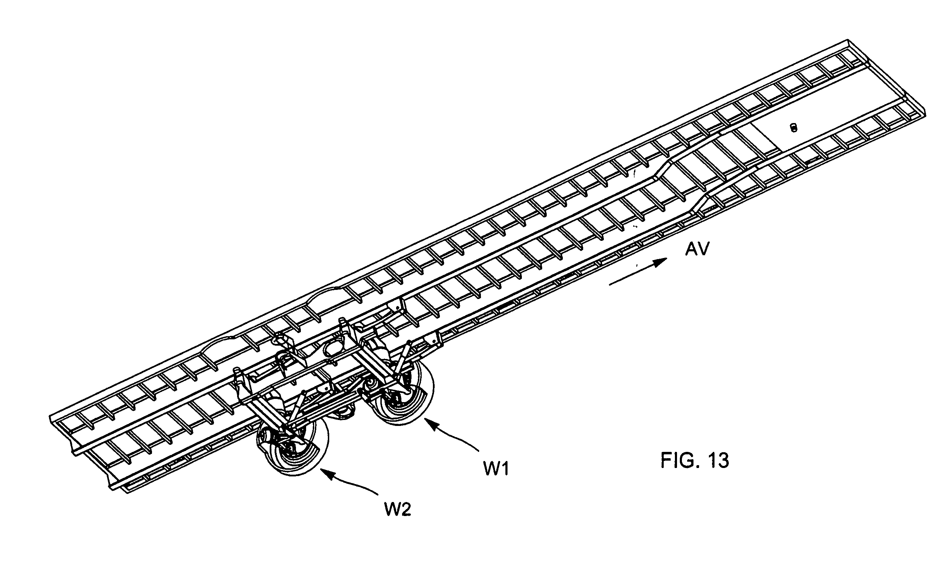

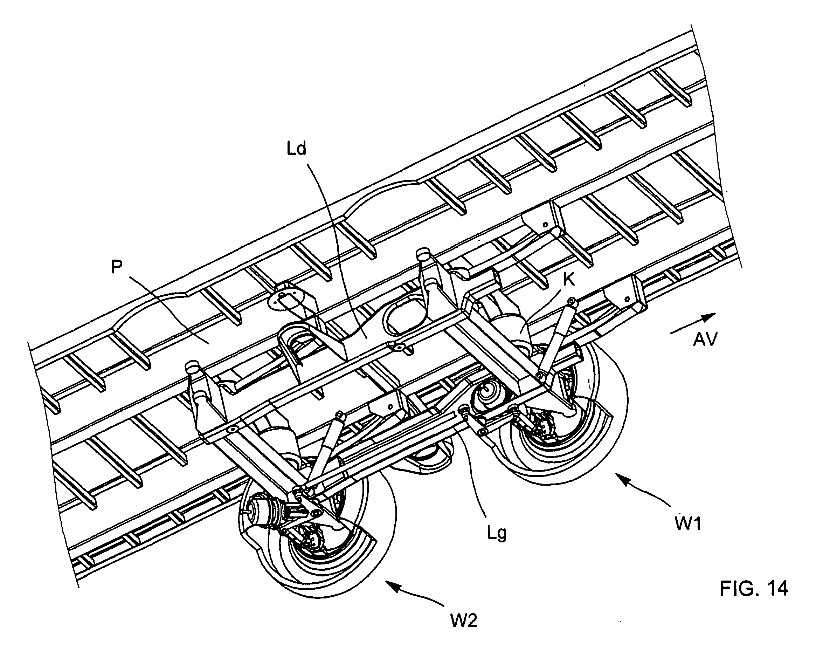

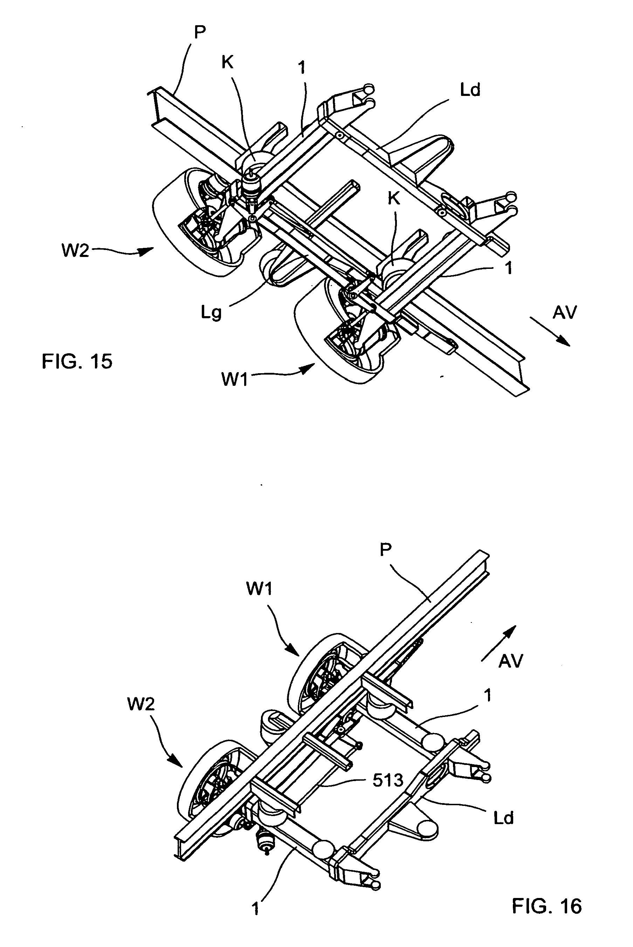

Bien que chacun des trains roulants illustrés aux figures 1 à 4, 8, et 10a à 16 ne comprenne qu'un premier essieu ou essieu avant W1 et un dernier essieu ou essieu arrière W2, il pourrait tout aussi bien comprendre trois essieux dont un essieu supplémentaire W disposé soit entre les essieux W1 et W2 (figure6c), soit devant ces essieux avant et arrière (figures 7a et 7b).

Chacun des essieux W1 et W2 comprend une traverse 1 et, pour chacun des côtés droit et gauche de la semi-remorque, un support de roue 2, et une roue 3.

Sur chacun des côtés de chaque essieu W1 ou W2, le support 2 situé de ce côté est lié à l'extrémité correspondante 10 de la traverse 1, et la roue 3 située de ce côté est portée par le support de roue 2 correspondant de manière à pouvoir tourner autour d'un axe Y lié à ce support.

Chacun des supports 2 à droite et à gauche de chaque essieu est par ailleurs monté pivotant par rapport à la traverse 1.

Chaque support 2 est ainsi relié à la traverse 1 de l'essieu auquel il appartient par une liaison incluant un pivot 4, le terme de "pivot" étant ici utilisé, par simple économie de langage, pour désigner aussi bien les pièces mécaniques permettant le pivotement de chaque support sur la traverse que l'axe du mouvement de pivotement de ce support.

Le pivot 4 de chaque roue 3 de chacun des essieux W1 et W2 est disposé en avant de l'axe Y de cette roue 3 dans le sens de déplacement privilégié AV, cette disposition conduisant, en cas de virage de la remorque, à l'application sur chaque roue 3 d'un couple sollicitant cette roue vers une position de pivotement dans laquelle le ripage de cette roue est réduit.

Par ailleurs, le pivot 4 de chaque roue 3 s'étend de préférence suivant une direction sensiblement verticale dans le plan vertical médian V passant par le centre de cette roue 3, perpendiculairement à l'axe Y.

Par "direction sensiblement verticale", on entend ici une direction faisant typiquement un angle au plus égal à 5 degrés avec la verticale. En revanche, il peut être avantageux de donner au pivot 4 de chaque roue 3 une inclinaison non totalement nulle avec la verticale, par exemple de l'ordre de 2 degrés, de manière que chaque roue subisse par gravité un couple de rappel qui la sollicite vers sa une position angulaire de roulement en ligne droite.

La liaison à pivot de chaque roue est avantageusement ménagée à l'intérieur du volume que délimite cette roue, c'est-à-dire dans l'espace libre à l'intérieur de sa jante.

Selon l'invention, le train roulant comprend des organes de transmission de couple, tels que 5 et 6, qui sont agencés pour transmettre un couple de pivotement entre les supports 2 équipant l'essieu avant W1 et les supports 2 équipant l'essieu arrière W2.

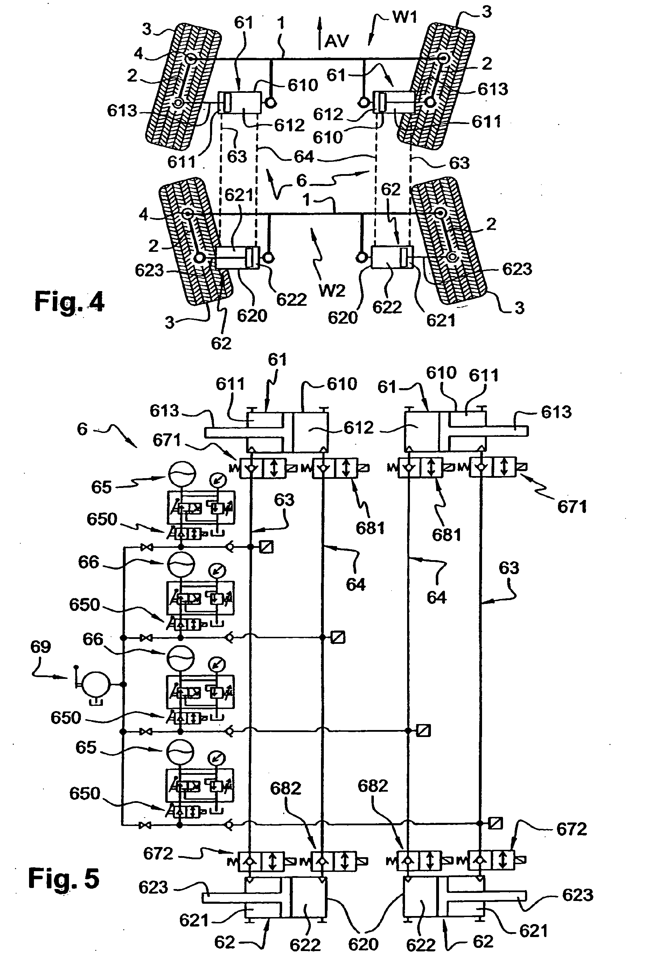

Comme illustré aux figures 4, 8, et 10a à 10c, ce couple de pivotement peut être transmis entre les supports 2 équipant l'essieu avant W1 et les supports 2 équipant l'essieu arrière W2 de manière que les roues arrière et avant soient sollicitées dans des sens de pivotement contraires.

Cependant, comme le montrent les figures 7a et 7b, le couple de pivotement peut, en variante, être transmis entre les supports 2 avant et arrière de manière que les roues arrière et avant soient sollicitées dans le même sens de pivotement.

L'ensemble des figures illustrent différents modes de réalisation du train roulant de l'invention ayant pour caractéristique commune que, pour chacun des essieux W1 et W2, les supports 2 droit et gauche sont montés pivotants par rapport à la traverse 1 indépendamment l'un de l'autre.

De plus, les supports droit et gauche 2 équipant chacun des essieux avant et arrière W1 et W2 sont respectivement couplés aux supports droit et gauche 2 équipant l'autre de ces essieux, c'est-à-dire respectivement l'essieu arrière W2 et l'essieu avant W1.

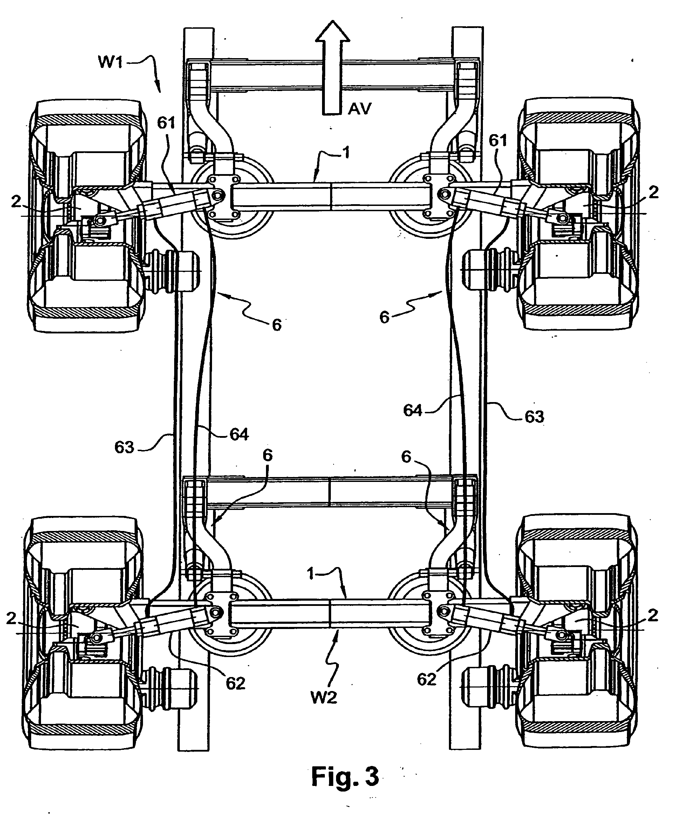

Néanmoins, les organes de transmission de couple peuvent revêtir diverses formes et notamment être de nature mécanique comme les organes 5 des figures 1, 2, 7a, 7b, et 8 notamment, ou de nature hydraulique comme les organes 6 des figures 3 à 5, et peuvent, au moins dans ces deux cas, être totalement passifs.

Lorsqu'ils sont de nature mécanique, les organes de transmission de couple 5 sont par exemple constitués d'organes allongés de transmission de force, et de leviers de renvoi.

Par exemple, les modes de réalisation des figures 1 et 7a utilisent, pour le couplage des roues gauches, une timonerie comprenant une tringle transversale 511 disposée sur la partie gauche de l'essieu avant W1, un levier de renvoi 531 articulé sur la traverse 1 de l'essieu avant W1, une tringle longitudinale 513, un levier de renvoi 532 articulé sur la traverse 1 de l'essieu arrière W2, et une tringle transversale 512 disposée sur la partie gauche sur l'essieu arrière W2.

De même, ces modes de réalisation utilisent, pour le couplage des roues droites, une timonerie comprenant une tringle transversale 521 disposée sur la partie droite de l'essieu avant W1, un levier de renvoi 541 articulé sur la traverse 1 de l'essieu avant W1, une tringle longitudinale 523, un levier de renvoi 542 articulé sur la traverse 1 de l'essieu arrière W2, et une tringle transversale 522 disposée sur la partie droite de l'essieu arrière W2.

Comme le montre la figure 1, les tringles longitudinales 513 et 523 peuvent être disposées au moins approximativement dans le plan médian des essieux pour minimiser les braquages parasites qui pourraient être induits par des différences de hauteur des essieux, ou un roulis provoqué par des inégalités du sol.

Un verrou 58 peut être prévu pour bloquer le système en ligne droite. En outre, un ou plusieurs amortisseurs de braquage peuvent être prévus pour calmer l'effet de flottement des roues ("shimmy").

L'ensemble des figures, à l'exception des figures 7a et 7b, illustrent un premier agencement des organes de transmission de couple dans lequel les roues de l'essieu avant W1 et de l'essieu arrière W2 sont sollicitées dans des sens de pivotement contraires.

On comprend bien, à la vue des figures illustrant ce premier agencement, que, lors d'un virage à droite, la roue avant gauche pivote vers la droite, c'est à dire qu'elle braque vers l'intérieur du véhicule, et les organes de transmission de couple imposent alors à la roue arrière gauche de pivoter vers la gauche, c'est à dire de braquer vers l'extérieur. Si l'on regarde maintenant la partie droite du véhicule, dans les mêmes conditions, la roue avant droite pivote vers la droite (elle braque vers l'extérieur du véhicule), et les organes de transmission de couple imposent à la roue arrière droite de pivoter vers la gauche, c'est à dire de braquer vers l'intérieur.

Les angles adoptés par les roues correspondent (si l'on fait abstraction de l'inertie du système) à l'équilibre des efforts transmis entre les roues avant et arrière. En particulier, on comprend bien qu'en l'absence de courbe, un effort transversal (par exemple occasionné par le dévers de la chaussée) ne peut pas faire braquer les roues car les organes de transmission de couple font que le couple venant d'une roue s'équilibre avec le couple identique venant de l'autre roue.

Le braquage d'une roue n'est donc pas libre mais conditionné par le braquage inverse de la roue couplée.

Dans le cas de l'agencement illustré aux figures 7a et 7b, dans lequel les roues de l'essieu avant W1 et de l'essieu arrière W2 sont sollicitées dans le même sens de pivotement, le braquage d'une roue n'est pas davantage libre, mais conditionné par le braquage dans le même sens de la roue couplée.

Les valeurs de braquage des roues gauches et droites diffèrent du fait de la différence des rayons de giration.

Comme les roues droite et gauche de chaque essieu peuvent braquer indépendamment l'une de l'autre, l'épure de Jeantaud est respectée de façon naturelle et spontanée.

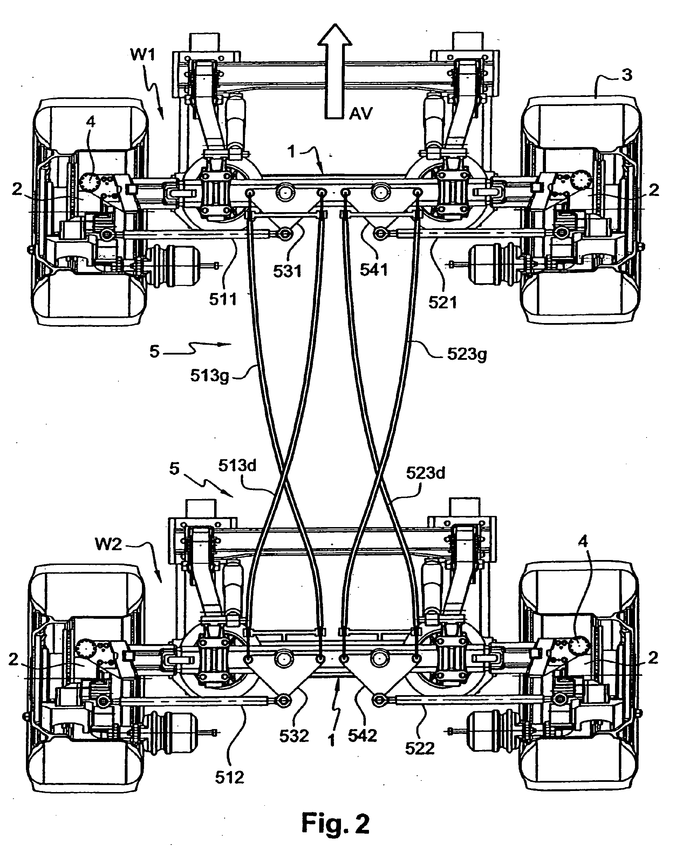

Le mode de réalisation de la figure 2 s'apparente au mode de réalisation de la figure 1, dont il se distingue essentiellement par le fait que les organes longitudinaux de transmission sont constitués non pas par des tringles 513 et 523, mais par des câbles sous gaine (par exemple de type Bowden) 513g, 513d, 523g, et 523d.

Si l'on utilise des câbles sous gaine capables de transmettre des efforts de traction mais aussi de compression (« push-pull »), les leviers de renvoi peuvent avoir la configuration décrite à la figure 1, c'est à dire ne comporter qu'un seul câble par côté.

Dans le mode de réalisation des figures 3 à 5, les organes de transmission de couple 6 sont de nature hydraulique.

Comme le montre la figure 3, ces organes comprennent notamment deux vérins 61 et 62, et deux liaisons hydrauliques 63 et 64, les vérins 61 et 62 étant respectivement associés aux essieux avant et arrière, W1 et W2.

Le vérin 61 présente (figure 4) un corps 610, deux chambres de travail 611 et 612 de volumes complémentaires, et une tige 613 commandant les volumes de ces chambres par l'intermédiaire d'un piston.

De même, le vérin 62 présente un corps 620, deux chambres de travail 621 et 622 de volumes complémentaires, et une tige 623 commandant les volumes de ces chambres par l'intermédiaire d'un piston.

Chacun des vérins avant gauche et droit 61 est lié de façon articulée, d'un côté par son corps 610 et de l'autre par sa tige 613, à la traverse 1 et au support 2 équipant l'essieu avant W1 du côté correspondant.

De même, chacun des vérins arrière gauche et droit 62 est lié de façon articulée, d'un côté par son corps 620 et de l'autre par sa tige 623, à la traverse 1 et au support 2 équipant l'essieu arrière W2 du côté correspondant.

Par ailleurs, la première liaison hydraulique 63 relie entre elles les premières chambres 611 et 621 des vérins avant et arrière 61 et 62, tandis que la seconde liaison hydraulique 64 relie entre elles les secondes chambres 612 et 622 de ces vérins 61 et 62.

Comme le montre la figure 5, la première liaison hydraulique 63 peut comprendre un accumulateur hydropneumatique 65 et une paire d'électrovalves 671 et 672, la première électrovalve 671 étant interposée entre le premier accumulateur 65 et la première chambre 611 du vérin avant 61, et la deuxième électrovalve 672 étant interposée entre le premier accumulateur 65 et la première chambre 621 du vérin arrière 62.

De même, la seconde liaison hydraulique 64 peut comprendre un accumulateur hydropneumatique 66 et une paire d'électrovalves 681 et 682, la première électrovalve 681 étant interposée entre le deuxième accumulateur 66 et la deuxième chambre 612 du vérin avant 61, et la deuxième électrovalve 682 étant interposée entre ce deuxième accumulateur 66 et la deuxième chambre 622 du vérin arrière 62.

Grâce à cet agencement, on peut bloquer les roues 3 dans une position angulaire de roulement en ligne droite par fermeture des électrovalves.

De préférence, des distributeurs à clapet 650 permettent, dans leur position anti-retour, d'empêcher tout retour de fluide vers les accumulateurs tout en autorisant la compensation des fuites des liaisons et, dans leur position passante, de recharger les accumulateurs au moyen d'une pompe 69.

Un avantage de l'invention concerne la réduction de l'usure des pneumatiques, en particulier dans le cas d'un usage régional. En usage régional, la remorque effectue de nombreuses manoeuvres, contourne de nombreux ronds-points et emprunte une proportion importante de routes sinueuses. Dans ces conditions, on a comparé l'usure due au ripage dans deux configurations connues et l'usure due au ripage dans une configuration selon l'invention.

La configuration 1 du tableau ci-dessous correspond au cas d'une remorque à trois essieux fixes (tridem fixe) tout à fait conventionnelle.

La configuration 2 correspond au cas d'une remorque à trois essieux, l'essieu central étant fixe et les essieux avant et arrière étant libres en braquage (tridem à 2 autovireurs) selon l'état de la technique.

La configuration 3 correspond au cas d'une remorque comportant, outre les essieux avant et arrière, un essieu supplémentaire fixe disposé en position centrale, les essieux avant et arrière étant capables de braquer et étant couplés en braquage dans des sens de pivotement contraires, conformément au premier agencement possible de l'invention (figures 4, 8, et 10a à 10c).

Le tableau ci-dessous donne pour chaque essieu de chaque configuration un indice de l'usure liée au ripage pour une semi-remorque en usage régional avec ronds-points. L'usure est donnée relativement à une base 100 correspondant à l'usure liée au ripage de l'essieu central de la remorque tridem fixe (configuration 1).

| Usure liée au ripage (base 100) | Essieu avant | Essieu central | Essieu arrière | **TOTAL** |
|---|---|---|---|---|
| Configuration 1 | 70 | 100 | 300 | 470 |
| Configuration 2 | 0 | 800 | 0 | 800 |
| **Configuration 3** | **80** | **80** | **80** | **240** |

Les autres composantes de l'usure (freinage en ligne droite en particulier) ne sont pas prises en compte ici.

Le train roulant selon l'invention permet donc dans ces conditions d'usage de diviser pratiquement par 2 le total des usures dues au ripage des trois essieux par rapport à un train roulant tridem fixe et par plus de 3 par rapport à un train roulant tridem à deux autovireurs libres.

De plus, le train roulant de l'invention, en répartissant les efforts transversaux de manière égale sur l'ensemble des essieux, offre un meilleur potentiel d'adhérence transversale, donc une meilleure sécurité.

En outre, l'invention présente l'avantage substantiel de rendre superflues les permutations périodiques de pneumatiques qui sont rendues nécessaires, sur les semi-remorques actuelles, par la dissymétrie des usures.

Comme on vient de le voir, le train roulant selon l'invention peut comporter 3 essieux, c'est-à-dire comporter un essieu supplémentaire fixe W (figures 6a à 6c; figures 7a et 7b) en plus des essieux avant et arrière W1 et W2 décrits ci-dessus et illustrés sur les autres figures.

Cependant, le train roulant de l'invention peut également ne comporter que deux essieux seulement, à savoir un essieu avant et un essieu arrière comme décrit sur les figures 1 à 4, à l'exclusion de tout essieu supplémentaire. L'avantage d'une telle configuration est bien sûr de réduire le nombre d'essieux et donc le poids à vide de la semi-remorque.

L'invention concerne principalement les semi-remorques mais on comprend qu'un tel train roulant peut aussi équiper l'arrière d'une remorque.

Par ailleurs, bien que les figures montrent des essieux équipés de roues simples, l'invention est bien sûr également applicable à des essieux à roues jumelées.

Aux figures 6a, 6b et 6c, on a représenté à des fins de comparaison, et pour une situation de roulage donnée, l'équilibre des efforts transversaux agissant sur les essieux d'une semi-remorque en virage à gauche, le véhicule avançant vers la gauche de chaque figure (AV).

Sur chacune de ces figures, on distingue les roues droites de la remorque (en trait fort épais), la direction de la normale au rayon de giration de l'essieu central fixe (en traits pointillés longs), et la direction du châssis de la remorque (en double trait continu fin), la direction du châssis dérivant d'un angle d par rapport à la direction de la normale au rayon de giration de l'essieu central fixe.

Les vecteurs V1, V et V2 représentent respectivement les vitesses des roues avant, milieu et arrière, portées par les normales aux rayons de giration R1, R et R2 de ces roues.

Les angles d1, d et d2 sont respectivement les angles de dérive des roues des essieux avant, milieu et arrière.

Enfin, les forces F1, F et F2 sont respectivement les efforts transversaux agissant sur les roues avant W1, milieu W, et arrière W2. On sait que la somme de ces trois forces a une valeur constante quelle que soit la configuration considérée, puisqu'elle doit être égale à la force centrifuge déterminée par la trajectoire du véhicule.

La figure 6a montre que la dérive des roues, sur une semi-remorque conforme à la configuration 1 du tableau de la page 15, est inversée entre l'essieu W1 et les essieux W et W2. L'effort transversal transmis par le sol à la roue est donc également inversé. Dans cette configuration, on peut dire que l'essieu avant travaille contre l'essieu central et l'essieu arrière.

La figure 6b montre que la dérive des roues, sur une semi-remorque conforme à la configuration 2 du tableau de la page 15, est nulle pour les essieux W1 et W2, mais très importante pour l'essieu fixe central. Les efforts transversaux sont donc nuls pour W1 et W2 et l'intégralité de la force centrifuge est compensée par la force F issue de l'essieu central.

Et la figure 6c montre que la dérive des roues, sur une semi-remorque conforme à l'invention et à la configuration 3 du tableau de la page 16, est equilibrée sur les trois essieux de cette remorque. Toutes les roues contribuent de manière positive, et dans des proportions similaires, à la force transversale globale.

Comme déjà annoncé plus haut, les figures 7a et 7b illustrent un agencement des organes 5 de transmission de couple grâce auquel les roues de l'essieu avant W1 et les roues de l'essieu arrière W2 sont sollicitées en pivotement dans le même sens, cet agencement permettant de doter la semi-remorque d'un essieu fixe supplémentaire W disposé devant les essieux arrière et avant.

Pour ce faire, et dans le cas tel qu'illustré où les organes de transmission de couple sont de nature mécanique, les leviers de renvoi avant et arrière tels que 531 et 532 sont liés de la même manière à la tige longitudinale correspondante 513, au lieu d'être croisés comme c'est le cas dans l'agencement illustré notamment à la figure 1.

L'agencement illustré aux figures 7a et 7b présente l'avantage de permettre au convoi de mieux s'inscrire dans la couronne de giration d'un rond point dans la mesure où la rotation de la semi-remorque s'effectue autour d'un point avancé que fournit l'essieu supplémentaire W disposé devant l'essieu avant W1.

Il est néanmoins souhaitable, pour optimiser cet agencement, de veiller à ce que les roues de l'essieu arrière W2 braquent davantage, en virage, que les roues de l'essieu avant W1, ce résultat pouvant notamment être obtenu en donnant à la branche transversale de chaque levier de renvoi avant tel que 531 une longueur supérieure à celle de la branche transversale du levier arrière correspondant, tel que 532.

Comme le comprendra aisément l'homme du métier à la lecture de la présente description, les organes de transmission de couple qui permettent de solliciter en pivotement dans le même sens les roues de l'essieu avant W1 et les roues de l'essieu arrière W2 pourraient prendre la forme d'organes de couplage hydrauliques tels que ceux illustrés à la figure 4, les liaisons hydrauliques 63 et 64 étant alors croisées au lieu d'être parallèles.

Dans ce cas, le braquage plus important des roues de l'essieu arrière W2 par rapport aux roues de l'essieu avant W1 pourrait par exemple être obtenu en donnant aux vérins 61 et 62 des sections et des longueurs différentes, l'angle de braquage des roues arrière étant lié à l'angle de braquage des roues avant par un coefficient multiplicatif au moins approximativement constant et supérieur à 1.

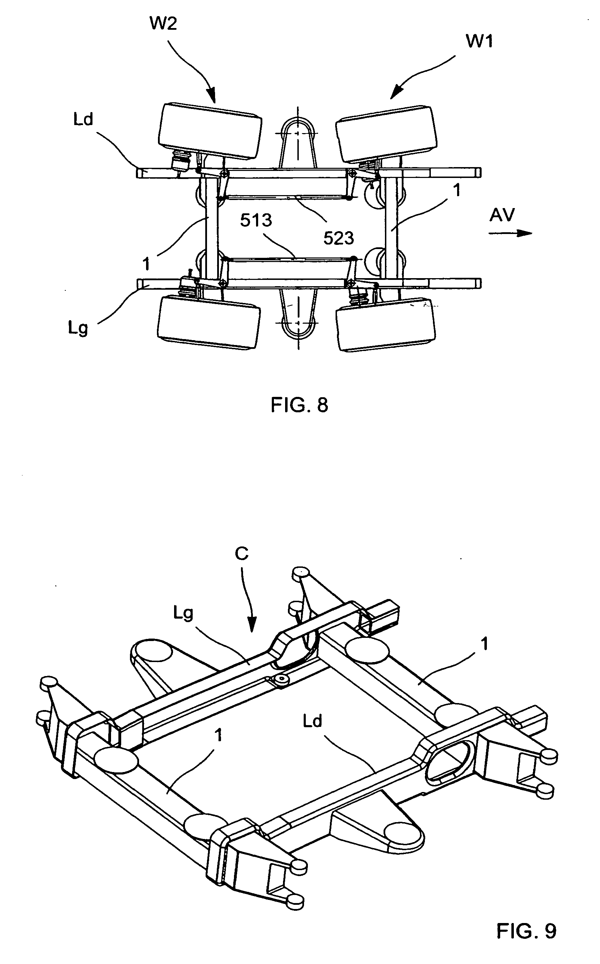

Comme le montre notamment la figure 9, il peut être avantageux, notamment dans le cas où les organes de transmission de couple 5 sont de nature mécanique, de lier longitudinalement entre eux les essieux braqueurs W1 et W2 de manière à éviter que les mouvements de suspension, qui ne sont pas toujours coordonnés, ne provoquent des mouvements de braquage gênants, indésirables, et générateurs d'usure.

Cette liaison peut être réalisée au moyen de barres longitudinales supplémentaires, telles que Ld et Lg, qui relient les essieux W1 et W2 et qui forment un cadre C avec les traverses 1 de ces essieux.

De préférence, ce cadre C présente une déformabilité élastique suffisante pour autoriser des débattements différentiels de suspension, tout en assurant la liaison longitudinale entre les essieux W1 et W2.

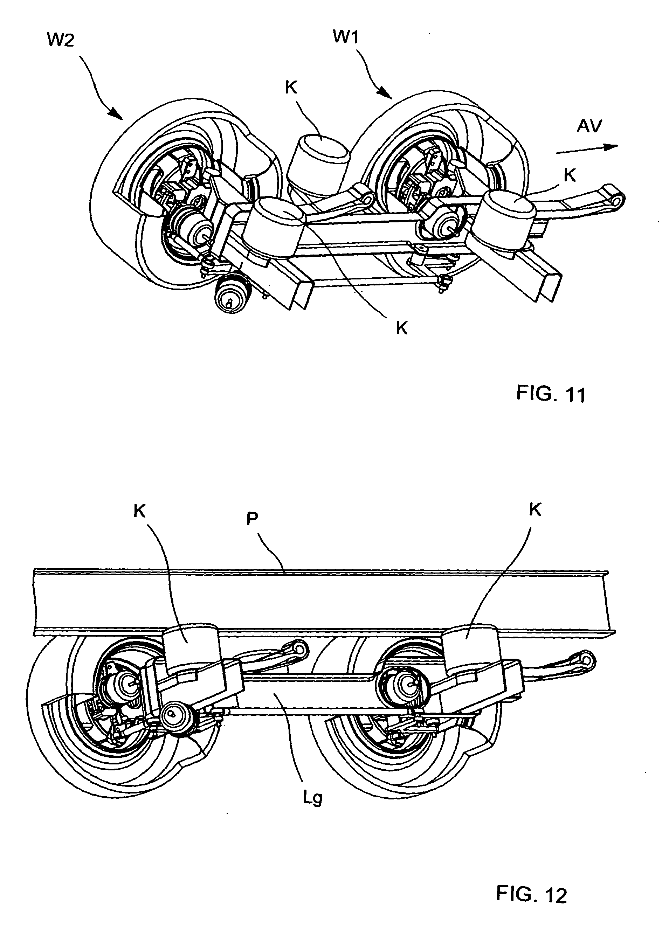

De plus, la suspension par coussins pneumatiques K (figures 11, 12 et 14 à 16) peut alors prendre appui en plusieurs endroits possibles sur ce cadre C, ce qui permet de disposer cette suspension et / ou de la répartir de manière à optimiser la fonction antiroulis de la semi-remorque.

Le cadre C est guidé par rapport au plateau P de la semi-remorque par des bras ou lames de ressort (visibles aux figures 11 à 15) encastrés sur ce cadre C.

Lorsqu'un essieu supplémentaire fixe W est prévu, ce troisième essieu peut être lié au cadre C ou être indépendant de ce dernier.

S'il est indépendant, il est préférable que ce troisième essieu W soit situé devant les essieux couplés W1 et W2 (figures 7a et 7b), de manière à éviter les interférences avec le cadre C.

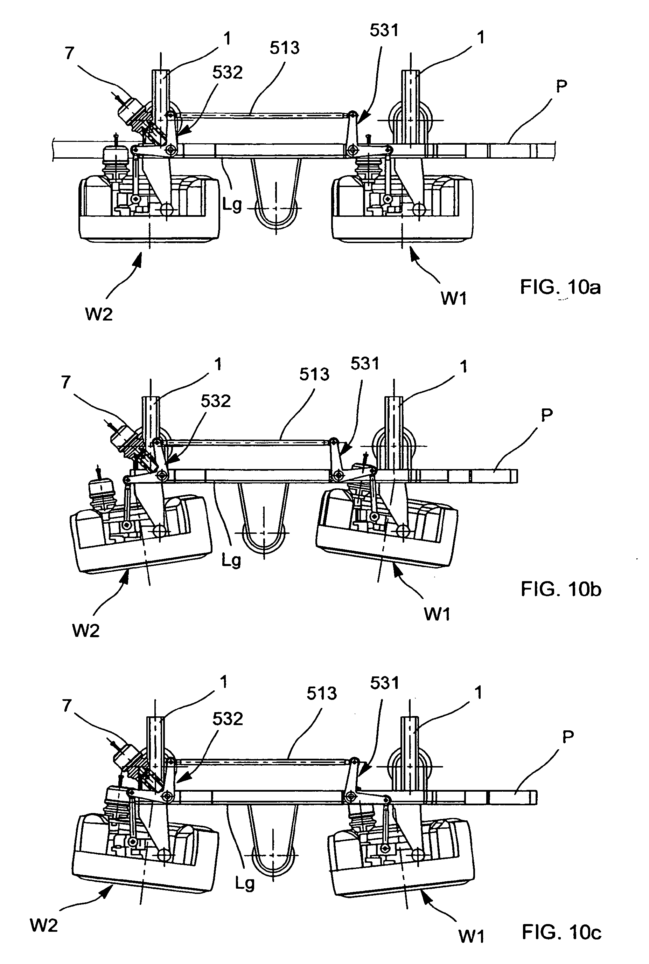

Dans le cas où les organes de transmission de couple 5 sont de nature mécanique, un verrouillage des roues en position de roulage en ligne droite peut être assuré au moyen d'actionneurs pneumatiques 7 (figures 10a à 10c) agissant par exemple sur l'un au moins des leviers de renvoi avant ou arrière, tels que 531 et 532, de chaque côté de la semi-remorque.

Selon la façon dont il est commandé, un tel actionneur 7 peut opérer un rappel élastique plus ou moins puissant, et avec ou sans seuil d'effort transversal, des roues vers leur position de roulage en ligne droite, jusqu'à bloquer ces dernières dans cette position.

## Revendications

1. Train roulant pour semi-remorque, destiné à permettre un roulement de la semi-remorque sur le sol dans un sens de déplacement privilégié (AV), ce train incluant au moins un essieu arrière (W2) et un essieu avant (W1), chaque essieu (W2, W1) comprenant au moins une traverse (1), des supports (2) droit et gauche respectivement liés à des extrémités (10) droite et gauche de la traverse (1), et des roues (3) droite et gauche respectivement portées par les supports (2) droit et gauche et tournant autour d'axes (Y) droit et gauche respectifs, ou, pour chaque essieu, les supports (2) droit et gauche sont montés sélectivement pivotants par rapport à la traverse (1) au moyen de liaisons à pivots droite et gauche respectives incluant des pivots (4) droit et gauche respectifs, ou le pivot (4) de chaque roue (3) de chaque essieu est disposé en avant de l'axe (Y) de cette roue (3) dans le sens de déplacement privilégié (AV), chaque roue (3) étant ainsi soumise à un couple de pivotement en cas de virage de la remorque, et ou ce train comprend des organes de transmission de couple (5, 6) agencés pour transmettre un couple de pivotement entre les supports (2) équipant l'essieu arrière (W2) et les supports (2) équipant l'essieu avant (W1), **caractérisé en ce que**, pour chaque essieu, les supports (2) droit et gauche sont montés sélectivement pivotants par rapport à la traverse (1) indépendamment l'un de l'autre, et **en ce que** les supports droit et gauche (2) équipant chacun des essieux arrière et avant (W2, W1) sont respectivement couplés aux supports droit et gauche (2) équipant l'autre (W1, W2) de ces essieux.

2. Train roulant suivant la revendication 1, **caractérisé en ce que** le pivot (4) de chacune des roues (3) droite et gauche de chacun des essieux (W2, W1) s'étend suivant une direction sensiblement verticale dans un plan sensiblement médian de cette roue (3) et perpendiculaire à l'axe (Y) de cette roue.

3. Train roulant suivant l'une quelconque des revendications précédentes, **caractérisé en ce que** les organes de transmission de couple (5, 6) sont totalement passifs.

4. Train roulant selon l'une des revendications précédentes, **caractérisé en ce que** les organes de transmission de couple (5) comprennent essentiellement des organes mécaniques allongés, tels que tringles (511-513, 521-523, 57) ou câbles (513g, 513d, 5123d, 523g), adaptés à la transmission de forces de traction/compression, et des leviers de renvoi (531, 541, 532, 542, 55, 56).

5. Train roulant selon la revendication 4, **caractérisé en ce que** les essieux arrière et avant (W2, W1) comprennent des tringles transversales (511, 512, 521, 522) dont chacune relie un support (2) à un levier de renvoi (531, 532, 541, 542; 55, 56) équipant l'essieu correspondant, et **en ce qu'**une tringle longitudinale (513, 523; 57) est agencée pour transmettre le couple de pivotement entre les supports (2) équipant l'essieu arrière (W2) et les supports (2) équipant l'essieu avant (W1) par l'intermédiaire des leviers de renvoi.

6. Train roulant selon l'une des revendications 4 ou 5, **caractérisé en ce que** les leviers de renvoi (531, 541, 532, 542, 55, 56) sont montés rotatifs sur les traverses (1) respectives des essieux arrière et avant (W2, W1).

7. Train roulant selon l'une des revendications précédentes, **caractérisé en ce qu'**il comprend en outre un essieu supplémentaire (W) constitué par un essieu fixe.

8. Train roulant selon l'une des revendications précédentes, **caractérisé en ce que** les organes de transmission de couple (6) sont agencés pour transmettre, entre les supports équipant l'essieu arrière et les supports équipant l'essieu avant, un couple de pivotement sollicitant les roues arrière et avant dans des sens de pivotement contraires.

9. Train roulant selon les revendications 7 et 8, **caractérisé en ce que** l'essieu supplémentaire (W) est disposé entre les essieux avant (W1) et arrière (W2).

10. Train roulant suivant l'une quelconque des revendications 1 à 3, **caractérisé en ce que** les organes de transmission de couple (6) comprennent au moins des premier et second vérins (61, 62) et des première et seconde liaisons hydrauliques (63, 64), **en ce que** les vérins (61, 62) présentent chacun un corps (610, 620) et des première et seconde chambres de travail (611, 612; 621, 622) de volumes complémentaires, **en ce que** les premier et second vérins (61, 62) sont respectivement associés aux essieux avant et arrière (W1, W2) et présentent des tiges respectives (613, 623) commandant les volumes de leurs chambres de travail respectives, et **en ce que** chaque vérin (61, 62) est lié de façon articulée, par son corps (610, 620) et sa tige (613, 623), à la traverse (1) et à l'un des supports (2) équipant l'essieu associé (W1, W2), la première liaison hydraulique (63) reliant entre elles les premières chambres (611, 621) des premier et second vérins (61, 62), et la seconde liaison hydraulique (64) reliant entre elles les secondes chambres (612, 622) des premier et second vérins (61, 62).

11. Train roulant suivant la revendication 10, **caractérisé en ce que** les première et seconde liaisons hydrauliques (63, 64) comprennent des premier et seconds accumulateurs hydropneumatiques respectifs (65, 66) et des première et seconde paires respectives d'électrovalves (671, 672; 681, 682), chaque électrovalve de la première paire (671, 672) étant interposée entre le premier accumulateur (65) et la première chambre (611, 621) de l'un des premier et second vérins (61, 62), et chaque électrovalve de la seconde paire (681, 682) étant interposée entre le second accumulateur (66) et la seconde chambre (612, 622) de l'un des premier et second vérins (61, 62).

12. Train roulant selon l'une des revendications 1 à 7, **caractérisé en ce que** les organes de transmission de couple (6) sont agencés pour transmettre, entre les supports équipant l'essieu arrière et les supports équipant l'essieu avant, un couple de pivotement sollicitant les roues arrière et avant dans le même sens de pivotement.

13. Train roulant selon les revendications 7 et 12, **caractérisé en ce que** l'essieu supplémentaire (W) est disposé devant les essieux avant (W1) et arrière (W2).

14. Train roulant selon l'une des revendications précédentes, **caractérisé en ce qu'**il comprend en outre un cadre (C) élastiquement déformable en torsion, liant longitudinalement entre eux les essieux avant (W1) et arrière (W2).

## Claims

1. A wheels assembly for a semi-trailer, intended to enable the semi-trailer to run on the ground in a specified direction of travel (AV), where this assembly includes at least one rear axle (W2) and one front axle (W1), where each axle (W2, W1) includes at least one cross-member (1), right and left supports (2) connected respectively to the right and left ends (10) of the cross-member (1), and right and left wheels (3) respectively carried by the right and left supports (2), and rotating around respective right and left axes (Y), where, for each axle, the right and left supports (2) are mounted to pivot selectively in relation to the cross-member (1) by means of respective right and left pivot links that include respective right and left pivots (4), where the pivot (4) of each wheel (3) of each axle is positioned in front of the axis (Y) of this wheel (3) in the specified direction of travel (AV), each wheel (3) thus being subjected to a pivoting torque when the trailer turns, and where this wheels assembly includes torque-transmission devices (5, 6) arranged to transmit a pivoting torque between the supports (2) fitted to the rear axle (W2) and the supports (2) fitted to the front axle (W1), **characterised in that**, for each axle, the right and left supports (2) are mounted to pivot selectively in relation to the cross-member (1) independently of each other, and **in that** the right and left supports (2) fitted to each of the rear and front axles (W2, W1) are coupled respectively to the right and left supports (2) fitted to the other (W1, W2) of these axles.

2. A wheels assembly according to claim 1, **characterised in that** the pivot (4) of each of the right and left wheels (3) of each of the axles (W2, W1) lies in a more-or-less vertical direction in a more-or-less median plane of this wheel (3), and perpendicular to the axis (Y) of this wheel.

3. A wheels assembly according to any of the previous claims, **characterised in that** the torque-transmission devices (5, 6) are totally passive.

4. A wheels assembly according to one of the previous claims, **characterised in that** the torque-transmission devices (5) essentially include extended mechanical devices, such as control rods (511-513, 521-523, 57) or cables (513g, 513d, 523d, 523g), designed for the transmission of traction/compression forces, and relay levers (531, 541, 532, 542, 55, 56).

5. A wheels assembly according to claim 4, **characterised in that** the rear and front axles (W2, W1) include transverse control rods (511, 512, 521, 522) each of which connects a support (2) to a relay lever (531, 532, 541, 542; 55, 56) fitted to the corresponding axle, and **in that** a longitudinal control rod (513, 523; 57) is arranged to transmit the pivoting torque between the supports (2) fitted to the rear axle (W2) and the supports (2) fitted to the front axle (W1) by means of the relay levers.

6. A wheels assembly according to one of claims 4 or 5, **characterised in that** the relay levers (531, 541, 532, 542, 55, 56) are mounted to rotate on the respective cross-members (1) of the rear and front axles (W2, W1).

7. A wheels assembly according to one of the preceding claims, **characterised in that** it further comprises an additional axle (W) consisting of a fixed axle.

8. A wheels assembly according to one of the preceding claims, **characterised in that** the torque-transmission devices (6) are designed to transmit, between the supports with which the rear axle is fitted and the supports with which the front axle is fitted, a pivoting torque that urges the rear and front wheels in opposite directions of pivoting.

9. A wheels assembly according to claims 7 and 8, **characterised in that** the additional axle (W) is placed between the front (W1) and rear (W2) axles.

10. A wheels assembly according to any of claims 1 to 3, **characterised in that** the torque-transmission devices (6) include at least first and second actuators (61, 62) and first and second hydraulic links (63, 64), **in that** the actuators (61, 62) each have a body (610, 620) and first and second working chambers (611, 612; 621, 622) with complementary volumes, **in that** the first and second actuators (61, 62) are associated respectively with the front and rear axles (W1, W2) and have respective connecting rods (613, 623) controlling the volumes of their respective working chambers, and **in that** each actuator (61, 62) is linked in an articulated fashion, by its body (610, 620) and its connecting rod (613, 623), to the cross-member (1), and to one of the supports (2) fitted to the associated axle (W1, W2), with the first hydraulic link (63) connecting together the first chambers (611, 621) of the first and second actuators (61, 62), and the second hydraulic link (64) connecting together the second chambers (612, 622) of the first and second actuators (61, 62).

11. A wheels assembly according to claim 10, **characterised in that** the first and second hydraulic links (63, 64) include respective first and second hydro-pneumatic accumulators (65, 66) and respective first and second pairs of solenoid valves (671, 672; 681, 682), with each solenoid valve of the first pair (671, 672) being positioned between the first accumulator (65) and the first chamber (611, 621) of one of the first and second actuators (61, 62), and each solenoid valve of the second pair (681, 682) being positioned between the second accumulator (66) and the second chamber (612, 622) of one of the first and second actuators (61, 62).

12. A wheels assembly according to one of claims 1 to 7, **characterised in that** the torque-transmission devices (6) are designed to transmit, between the supports with which the rear axle is fitted and the supports with which the front axle is fitted, a pivoting torque that urges the rear and front wheels in the same direction of pivoting.

13. A wheels assembly according to claims 7 and 12, **characterised in that** the additional axle (W) is placed in front of the front (W1) and rear (W2) axles.

14. A wheels assembly according to one of the preceding claims, **characterised in that** it further comprises a frame (C) that is elastically deformable in torsion, longitudinally connecting the front (W1) and rear (W2) axles together.

## Patentansprüche

1. Achsaggregat für Sattelauflieger, das dazu bestimmt ist, eine Rollbewegung des Sattelaufliegers auf dem Boden in einer bevorzugten Bewegungsrichtung (AV) zu gestatten, wobei dieses Aggregat mindestens eine Hinterachse (W2) und eine Vorderachse (W1) aufweist, wobei jede Achse (W2, W1) mindestens einen Querträger (1), eine rechte und eine linke Stütze (2), die jeweils mit dem rechten und dem linken Ende (10) des Querträgers (1) verbunden sind, und ein rechtes und ein linkes Rad (3) umfasst, die jeweils von der rechten und der linken Stütze (2) getragen werden und sich um die rechte bzw. linke Achse (Y) drehen, oder für jede Achse ist die rechte und die linke Stütze (2) mittels Verbindungen mit einem jeweiligen rechten und linken Drehzapfen bezüglich des Querträgers (1) gezielt schwenkend montiert, wobei diese Verbindungen einen rechten bzw. einen linken Drehzapfen (4) aufweisen, oder der Drehzapfen (4) jedes Rads (3) jeder Achse ist in der bevorzugten Bewegungsrichtung (AV) vor der Achse (Y) dieses Rads (3) angeordnet, wobei jedes Rad (3) beim Drehen des Aufliegers somit einem Schwenkmoment unterworfen wird, und/oder das Aggregat umfasst Momentübertragungselemente (5, 6), die zum übertragen eines Schwenkmoments zwischen den Stützen (2) angeordnet sind, mit denen die Hinterachse (W2) ausgerüstet ist, und den Stützen (2), mit denen die Vorderachse (W1) ausgerüstet ist, **dadurch gekennzeichnet, dass** die rechte und die linke Stütze (2) für jede Achse unabhängig von einander gezielt schwenkend bezüglich des Querträgers (1) montiert sind und dass die rechte und die linke Stütze (2), mit denen jeweils die Hinter- und die Vorderachse (W2, W1) ausgerüstet ist, jeweils an die rechte und die linke Stütze (2) gekoppelt sind, mit denen die andere dieser Achsen (W1, W2) ausgerüstet ist.

2. Achsaggregat nach Anspruch 1, **dadurch gekennzeichnet, dass** sich der Drehzapfen (4) jedes rechten und linken Rads (3) jeder der Achsen (W2, W1) in einer im Wesentlichen vertikalen Richtung in einer im Wesentlichen mittleren Ebene dieses Rads (3) und senkrecht zur Achse (Y) dieses Rads erstreckt.

3. Achsaggregat nach einem der vorhergehenden Ansprüche, **dadurch gekennzeichnet, dass** die Momentübertragungselemente (5, 6) vollkommen passiv sind.

4. Achsaggregat nach einem der vorhergehenden Ansprüche, **dadurch gekennzeichnet, dass** die Momentübertragungselemente (5) im Wesentlichen längliche mechanische Elemente wie Stangen (511 - 513, 521 - 523, 57) oder Kabel (513g, 513d, 523d, 523g), die geeignet sind, Zug-/Druckkräfte zu übertragen, und Umlenkhebel (531, 541, 532, 542, 55, 56) umfassen.

5. Achsaggregat nach Anspruch 4, **dadurch gekennzeichnet, dass** die Hinter- und die Vorderachse (W2, W1) Querstangen (511, 512, 521, 522) umfassen, die jeweils eine Stütze (2) mit einem Umlenkhebel (531, 532, 541, 542; 55, 56) verbinden, mit dem die entsprechende Achse ausgerüstet ist, und dass eine Längsstange (513, 523; 57) dazu angeordnet ist, das Schwenkmoment zwischen den Stützen (2), mit denen die Hinterachse (W2) ausgerüstet ist, und den Stützen (2), mit denen die Vorderachse (W1) ausgerüstet ist, mittels Umlenkhebeln zu übertragen.

6. Achsaggregat nach Anspruch 4 oder 5, **dadurch gekennzeichnet, dass** die Umlenkhebel (531, 541, 532, 542, 55, 56) drehbar an den jeweiligen Querträgern (1) der Hinter- und der Vorderachse (W2, W1) montiert sind.

7. Achsaggregat nach einem der vorhergehenden Ansprüche, **dadurch gekennzeichnet, dass** es ferner eine Zusatzachse (W) umfasst, die aus einer feststehenden Achse besteht.

8. Achsaggregat nach einem der vorhergehenden Ansprüche, **dadurch gekennzeichnet, dass** die Momentübertragungselemente (6) dazu angeordnet sind, ein die Hinter- und Vorderräder in gegensätzlichen Schwenkrichtungen beaufschlagendes Schwenkmoment zwischen den Stützen, mit denen die Hinterachse ausgerüstet ist, und den Stützen, mit denen die Vorderachse ausgerüstet ist, zu übertragen.

9. Achsaggregat nach Ansprüchen 7 und 8, **dadurch gekennzeichnet, dass** die Zusatzachse (W) zwischen der vorder- (W1) und der Hinterachse (W2) angeordnet ist.

10. Achsaggregat nach einem der Ansprüche 1 bis 3, **dadurch gekennzeichnet, dass** die Momentübertragungselemente (6) mindestens einen ersten und einen zweiten Zylinder (61, 62) und eine erste und eine zweite hydraulische Verbindung (63, 64) umfassen, dass die Zylinder (61, 62) jeweils einen Körper (610, 620) und eine erste und eine zweite Arbeitskammer (611, 612; 621, 622) mit komplementären Volumen aufweisen, dass der erste und der zweite Zylinder (61, 62) jeweils der vorder- und der Hinterachse (W1, W2) zugeordnet sind und jeweilige Stangen (613, 623) aufweisen, die die Volumen ihrer jeweiligen Arbeitskammern steuern, und dass jeder Zylinder (61, 62) gelenkig über seinen Körper (610, 620) und seine Stange (613, 623) mit dem Querträger (1) und mit einer der Stützen (2), mit der die zugeordnete Achse (W1, W2) ausgerüstet ist, verbunden ist, wobei die erste hydraulische Verbindung (63) die ersten Kammern (611, 621) des ersten und des zweiten Zylinders (61, 62) miteinander verbinden und die zweite hydraulische Verbindung (64) die zweiten Kammern (612, 622) des ersten und des zweiten Zylinders (61, 62) miteinander verbinden.

11. Achsaggregat nach Anspruch 10, **dadurch gekennzeichnet, dass** die erste und die zweite hydraulische Verbindung (63, 64) einen jeweiligen ersten und zweiten hydropneumatischen Speicher (65, 66) und ein jeweiliges erstes und ein zweites Paar Elektroventile (671, 672; 681, 682) umfassen, wobei jedes Elektroventil des ersten Paars (671, 672) zwischen dem ersten Speicher (65) und der ersten Kammer (611, 621) des ersten oder des zweiten Zylinders (61, 62) liegt und jedes Elektroventil des zweiten Paars (681, 682) zwischen dem zweiten Speicher (66) und der zweiten Kammer (612, 622) des ersten oder des zweiten Zylinders (61, 62) liegt.

12. Achsaggregat nach einem der Ansprüche 1 bis 7, **dadurch gekennzeichnet, dass** die Momentübertragungselemente (6) dazu angeordnet sind, ein die Hinter- und die Vorderräder in derselben Schwenkrichtung beaufschlagendes Schwenkmoment zwischen den Stützen, mit denen die Hinterachse ausgerüstet ist, und den Stützen, mit denen die Vorderachse ausgerüstet ist, zu übertragen.

13. Achsaggregat nach Ansprüchen 7 und 12, **dadurch gekennzeichnet, dass** die Zusatzachse (W) vor der Vorder- (W1) und der Hinterachse (W2) angeordnet ist.

14. Achsaggregat nach einem der vorhergehenden Ansprüche, **dadurch gekennzeichnet, dass** es ferner einen elastisch torsionsweichen Rahmen (C) umfasst, der die Vorder- (W1) und die Hinterachse (W2) in Längsrichtung miteinander verbindet.
